(19)

Europäisches
Patentamt
European
Patent Office
Office européen
des brevets

(11) **EP 2 296 091 A1**

(12) **EUROPEAN PATENT APPLICATION**

(43) Date of publication:
**16.03.2011 Bulletin 2011/11**

(51) Int Cl.:
***G06F 13/16*** (2006.01)     ***G06F 13/362*** (2006.01)

(21) Application number: **09170189.6**

(22) Date of filing: **14.09.2009**

<table>
<tr><td>(84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**</td><td>(72) Inventor: **Henriksson, Tomas**<br>**5656 AE, Eindhoven (NL)**<br><br>(74) Representative: **Krott, Michel**<br>**High Tech Campus 32**<br>**5656 AE  Eindhoven (NL)**</td></tr>
<tr><td>(71) Applicant: **NXP B.V.**<br>**5656 AG Eindhoven (NL)**</td><td></td></tr>
</table>

(54)     **Servicing low-latency requests ahead of best-effort requests**

(57)     The invention relates to a method of controlling access of a System-on-Chip to an off-chip memory, wherein the System-on-Chip comprises a plurality of agents which need access to the memory. The method comprises: i) receiving low-priority requests (CBR, BER) for access to the memory; ii) receiving high-priority requests (LLR) for access to the memory; iii) distinguishing between first-subtype requests (CBR) and second-subtype requests (BER) in the low-priority requests (CBR, BER), wherein the first-subtype requests (CBR) require a latency-rate guarantee, and iv) arbitrating between the high-priority requests (LLR) and the low-priority requests (CBR, BER) such that the high-priority requests (LLR) are serviced with the highest priority, while guaranteeing the latency-rate guarantee for the first-subtype requests (CBR), wherein the high-priority requests (LLR) are serviced before the second-subtype requests (BER) if there are no first-subtype requests (CBR) to be serviced for guaranteeing the latency-rate guarantee. The invention further relates to a memory controller for use in a System-on-Chip connected to an off-chip memory, wherein the System-on-Chip comprises a plurality of agents, which need access to the memory, wherein the memory controller is configured for carrying such method. The invention also relates to a System-on-Chip comprising such memory controller. With the invention the high-priority requests (LL-requests) get a better service, i.e. a smaller average latency, at the expense of the second-subtype requests.

**Fig. 2**

EP 2 296 091 A1

**Description**

FIELD OF THE INVENTION

The invention relates to a method of controlling access of a System-on-Chip to an off-chip memory, wherein the System-on-Chip comprises a plurality of agents which need access to the memory. The invention also relates to a memory controller for use in a System-on-Chip connected to an off-chip memory, wherein the System-on-Chip comprises a plurality of agents, which need access to the memory, wherein the memory controller is configured for carrying out such method. Furthermore, the invention relates to a computer program product comprising instructions for causing a processor to perform such method. The invention further relates to a System-on-Chip comprising such memory controller.

BACKGROUND OF THE INVENTION

Multi-core architectures have recently attracted substantial attention, because of the increasing difficulty to push processor core speeds beyond the few GHz mark already reached some years back. Therefore the computer devices industry has recently focused on instantiating the same processor core multiple times (dual-core, quad-core) and improving communication mechanisms between multiple cores. In contrast, the consumer devices industry has typically looked at heterogeneous compute platforms that utilize a mix of industry-standard CPU, fixed-point DSP, VLIW, and function-specific HW cores, an example being the Nexperia™ platform [see also the following publications: "S. Dutta et al. Viper: A multiprocessor SOC for Advanced Set-Top Box and Digital TV Systems. IEEE Design & Test of Computers, September - October 2001, pages 21-31 "; and "Claasen, T.A.C.M.: System on a chip: changing IC design today and in the future, Micro, IEEE, Volume 23, Issue 3, May-June 2003, pages 20-26"]. An important advantage of the heterogeneous platform approach is that algorithms can be executed on the processor core that is best suited for them. Functional subsystems, consisting of several co-operating algorithms, are implemented on a single processor core, possibly supported by function-specific HW cores. The functional subsystems have well-defined communication interfaces, which make debug and system integration effort low. Recent advances in CMOS technology allow integration of an ever growing number of processor cores on a single die. This high level of integration offers a cost reduction, whilst at the same time increasing competition for usage of scarce shared HW resources.

A common architecture for a System-on-Chip (SoC) is one where there are several agents (IP cores, IP blocks, functional blocks, etc) that access the shared memory (for example a DRAM or an SDRAM) via a memory controller. In such architecture the memory controller arbitrates among requests (transactions with the memory) from the different agents. In certain SoCs from NXP the requests are split up into two categories, low-latency (LL) requests and constant-bandwidth (CB) requests. In those SoCs, the CB-requests are guaranteed a limited latency and a minimum transaction rate on request-stream level (i.e. a latency-rate guarantee) by an accounting mechanism, i.e. in order to do so a so-called CB-account has to be maintained, which keeps track of the latitude with respect to the latency-rate guarantee of the CB stream. The LL-requests have the highest priority and the CB-requests are serviced when there are no LL-requests. When the CB-account reaches a certain threshold value (boost value), which indicates that the guarantee of the CB-requests is about to be violated, the LL-requests are blocked and the CB-requests get serviced. In that way the CB-requests get the guaranteed maximum latency and a minimum rate (bandwidth). This is implemented in the IP2032 memory controller, used in several SoCs from NXP. It is also included in the IP2035 memory controller.

The memory that is shared amongst the plurality of agents is generally a volatile memory (DRAM, SDRAM) that requires refresh commands, but this is not essential for the invention. A further context of the invention is that the memory is a separate chip or chipset. This implies certain problems and limitations to be overcome. The access path is via pins, which are very costly in terms of packaging, area, etc. The limited number of pins reduces the available memory access bandwidth to a level which is barely enough for the memory access requirements. This makes the memory bandwidth a system bottleneck. The memory is shared by the agents, both in terms of memory space as well as, more importantly, in terms of memory access bandwidth.

The accounting mechanism may be performed in different ways. In an example a CB-account is maintained which keeps track of the actual latency-rate situation of the CB-request stream and the CB-account is used to control the temporarily blocking of the LL-requests.

Between the LL and CB ports and the physical interface to the DRAM, there are first-in-first-out (FIFO) queues. There is at least one queue for the LL-requests and at least one queue for the CB-requests. There may be multiple queues for allowing easy reordering of requests for obtaining a higher utilization of the memory interface. The advantage of using queues is that the utilization of the memory interface can be increased. The queues contain bursts (for example DDR bursts). Queue lengths may range between 3 and 8 DDR bursts, for example.

There also exist so-called Best-effort (BE) requests, which do not need a guarantee for a maximum latency and a minimum rate. Typically, these BE-requests are mixed with the CB-requests outside the memory controller in a time-multiplexer controlled by an arbiter. Due to their deviating requirement on streamlevel the BE-requests have the lowest priority in the arbiter of the time-multiplexer. The BE-requests cannot be given a queue of their own in the memory controller because the arbitration inside the memory controller already struggles with the high clock frequencies of the memory interface (for example a double-data-rate (DDR) interface) and cannot handle one more port with a separate queue.

Under normal situations, when the CB-traffic is equal to the given guarantee, the LL-requests get the best possible service, while still maintaining the guarantee for the CB-requests, and the BE-requests have to wait until a period with less CB or LL requests.

When the CB-bandwidth need is not constant, but varying over time, dependent on the data that is processed, the latency-rate guarantee has to be given taking into account the worst case scenario. As a consequence, a bandwidth must be guaranteed for serving CB-requests during peak periods that is higher than the long-term average bandwidth. At periods when the CB-traffic uses less than the guaranteed bandwidth, the BE-requests are serviced ahead of the LL-requests, because of the guaranteed rate for the CB-queue.

As illustrated above, a problem of the known memory controller is that the service given to the LL-requests is not always optimal, i.e. the average latency of the LL-requests is relatively high.

SUMMARY OF THE INVENTION

It is an object of the invention to provide a method of controlling access of a System-on-Chip to an off-chip memory, in which the high-priority requests (LL-requests) get a better service, i.e. a smaller average latency. It is a further object of the invention to provide a memory controller for carrying out such method.

The invention is defined by the independent claims. The dependent claims define advantageous embodiments.

In a first aspect, in accordance with the first object, the invention relates to a method of controlling access of a System-on-Chip to an off-chip memory, wherein the System-on-Chip comprises a plurality of agents which need access to the memory. The method comprises:

- receiving low-priority requests for access to the memory, wherein the low-priority requests are received from a first-subset of the plurality of agents;
- receiving high-priority requests for access to the memory, wherein the high-priority requests are received from a second-subset of the plurality of agents;
- distinguishing between first-subtype requests and second-subtype requests in the low-priority requests, wherein the first-subtype requests require a latency-rate guarantee, and wherein the second-subtype requests do not require the latency-rate guarantee;
- arbitrating between the high-priority requests and the low-priority requests such that the high-priority requests are serviced with the highest priority, while guaranteeing the latency-rate guarantee for the first-subtype requests, wherein the high-priority requests are serviced before the second-subtype requests if there are no first-subtype requests to be serviced for guaranteeing the latency-rate guarantee.

The effect of the features of the invention is as follows. After receipt of the low-priority requests the first-subtype requests and the second-subtype requests are distinguished from each other. The arbitration between the high-priority requests and the low-priority requests is subsequently carried out such that the high-priority requests are serviced with the highest priority, while guaranteeing the latency-rate guarantee for the first-subtype requests, wherein the high-priority requests are serviced before the second-subtype requests if there are no first-subtype requests to be serviced. A consequence of this is that high-priority requests get serviced earlier and thus the average latency of the high-priority requests is reduced, i.e. get a better service.

With latency-rate guarantee it is meant that the low-priority requests get a latency guarantee (i.e. a maximum latency that holds for each request/transaction), a rate-guarantee (i.e. a minimum bandwidth guaranteed over a fixed or variable time window), or a combination of both (i.e. a maximum latency and a minimum bandwidth). Even though the embodiments discussed in the figure description all discuss the last option, the invention is applicable in a broader sense including the first two options.

It must be noted that it is possible that the first sub-set and second sub-set of the plurality of agents may overlap, i.e. that some agents may require multiple memory accesses having different requirements. However, such variations do not depart from the general architecture wherein within the memory gives the high-priority requests a higher priority than the second-subtype requests in the low-priority request stream, while still guaranteeing the latency-rate guarantee for the first-subtype requests.

It must also be noted that in the claims and throughout the description the plural form of request is used. This has been done for enhancing the understanding of the invention. However, such term may also include a single request within a very long time window (embedded by idle time or requests of another type). It will become apparent from the given context if such situation is included or not.

In an embodiment of the method in accordance with the invention the arbitrating between the high-priority requests and the low-priority requests is carried out such that the high-priority requests are serviced first and the low-priority requests are serviced when there are no high-priority requests pending, unless the guaranteeing of the latency-rate guarantee for the first-subtype requests is at risk, in which case the low-priority requests are serviced ahead of high-priority requests until the latency-rate guarantee can be guaranteed again. This embodiment constitutes a convenient accounting mechanism which can be used in the invention, wherein the latency-rate guarantee for the low-priority requests is guaranteed.

In an embodiment of the method in accordance with the invention the guaranteeing of the latency-rate guarantee for the first-subtype requests is achieved by maintaining a low-priority account which keeps track of a latitude of the pending first-subtype requests with respect to the latency-rate guarantee of the low-priority requests on request-stream level. The accounting mechanism in this embodiment relies on maintaining the low-priority account. In the description a possible (advantageous) implementation of the maintaining of the priority-account is discussed.

In an embodiment of the method in accordance with the invention the distinguishing between the first-subtype requests and the second-subtype requests is achieved by providing the requests with an indicator tag for indicating the respective subtype request, wherein the indicator tag is determined based on a respective one of the first-subset of the plurality of agents from which the respective request is received. This embodiment constitutes a first option of how the first-subtype requests and the second-subtype requests can be distinguished from each other. At this stage, it must be noted that during design of a System-on-Chip it is known what requests are being sent by the different agents. Furthermore, it may occur that a specific one of the plurality of agents requires both high-priority requests and low-priority requests. Also, it may occur that another specific one of the plurality of agents sends low-priority requests of both subtypes. In any case such different requests sent by a same agent then occur via different paths (and different corresponding adaptors) such that via one path only requests of a single type are being received. Hence, the low-priority requests being received can be provided with an indicator tag for indicating the corresponding subtype.

In an embodiment of the method in accordance with the invention, during or before providing the requests with the indicator tag, the first-subtype requests and the second-subtype requests are time-multiplexed to obtain a low-priority request stream to be serviced. Time-multiplexing said subtype requests to obtain a low-priority request stream is known as such. However, the inventors have realized that the indicator tag may be conveniently provided in this stage. The time-multiplexing process complexity is hardly increased because of the provision of the tag.

In an embodiment of the method in accordance with the invention the low-priority request stream is further provided with a sideband-signal for indicating if there are first-subtype requests pending before time-multiplexing of the low-priority requests, and in the maintaining of the low-priority account only the first-subtype requests in the low-priority stream are taken into account making use of the indicator tag. Furthermore, in this embodiment the low-priority account is reset i) when the sideband signal indicates that there are no first-subtype requests pending before time-multiplexing, and ii) when there are no first-subtype requests in progress after time-multiplexing. This embodiment provides a convenient implementation of the invention for the first variant of the distinguishing between the subtype requests.

In an embodiment of the method in accordance with the invention the distinguishing between first-subtype requests and the second-subtype requests is achieved by receiving the subtype requests via different ports, wherein a first one of said different ports is assigned to the first-subtype requests and a second one of said different ports is assigned to the second-subtype request, after receipt of the subtype-requests via the different ports, the respective subtype requests are time-multiplexed to obtain an internal low-priority request stream to be serviced. This embodiment constitutes a second option of how the first-subtype requests and the second-subtype requests can be distinguished from each other. At this stage, it must be noted that during design of a System-on-Chip it is known what requests are being sent by the different agents. Furthermore, it may occur that a specific one of the plurality of agents requires both high-priority requests and low-priority requests. Also, it may occur that another specific one of the plurality of agents sends low-priority requests of both subtypes. In any case such different requests sent by a same agent then occur via different paths (and different corresponding adaptors) such that via one path only requests of a single type are being received. Hence, it is well possible to separate (and thereby distinguish) said requests completely at receipt from the agents (using a different port for each type of request).

In an embodiment of the method in accordance with the invention a first-subtype request stream is received via the first one of said different ports, and the first-subtype request stream is generated by time-multiplexing first-subtype requests received by the respective agents. Furthermore, in this embodiment a second-subtype request stream is received via the second one of said different ports, and the second-subtype request stream is generated by time-multiplexing second-subtype requests received by the respective agents.

In an embodiment of the method in accordance with the invention in the maintaining of the low-priority account only the first-subtype requests in the first-subtype request stream are taken into account. Furthermore, in this embodiment the low-priority account is reset: i) when there are no first-subtype requests pending on the first one of said different ports, and ii) when there are no first-subtype requests in progress after receipt on the first one of said different ports. This embodiment provides a convenient implementation of the invention for the second variant of the distinguishing between the subtype requests.

In a second aspect, in accordance with the second object, the invention relates to a memory controller for use in a System-on-Chip connected to an off-chip memory, wherein the System-on-Chip comprises a plurality of agents, which need access to the memory, wherein the memory controller is configured for carrying out the method in accordance with the invention. Such memory controller may be implemented in various different ways. A few example embodiments are discussed below and in the figure description. In any case, all embodiments of the method of the invention have corresponding embodiments of the memory controller performing such method.

An embodiment of the memory controller in accordance with the invention comprises:

- a low-priority input port for receiving the low-priority requests for access to the memory, wherein the low-priority requests are received from the first-subset of the plurality of agents;
- a high-priority input port for receiving high-priority requests for access to the memory, wherein the high-priority requests are received from the second-subset of the plurality of agents;
- a low-priority control gate being coupled to the low-priority input port for receiving the low-priority requests;
- a high-priority control gate being coupled to the high-priority input port for receiving the high-priority requests;
- a low-priority command generation stage being coupled to the low-priority control gate for receiving the low-priority requests and for generating low-priority commands for the memory;
- a high-priority command generation stage being coupled to the high-priority control gate for receiving the high-priority requests and for generating high-priority commands for the memory, and
- an accounting unit being coupled to the low-priority input port for monitoring the latency-rate guarantee for the first-subtype requests, and being coupled to the high-priority control gate for controlling the high-priority control gate accordingly.

This embodiment of the memory controller provides a convenient implementation of a double-queue controller configuration for carrying out the method of the invention.

In an embodiment of the memory controller in accordance with the invention the low-priority input port comprises a first port for receiving the first-subtype requests and a second port for receiving the second-subtype requests for distinguishing between the first-subtype requests and the second-subtype requests in the low-priority requests. In this embodiment the memory controller further comprises a low-priority multiplexer being coupled to the first port and the second port and being configured for time-multiplexing said sub-type requests to obtain an internal low-priority request stream, wherein the internal low-priority request stream is received by the low-priority control gate. Furthermore, in this embodiment the first port is coupled to the accounting unit and configured for generating an accounting signal for the accounting unit. This embodiment provides a convenient implementation for carrying out the method of claim 9.

An embodiment of the memory controller in accordance with the invention further comprises an input time-multiplexer having multiplexer-inputs being coupled to the plurality of agents for receiving the first-subtype requests and the second-subtype requests, wherein the input time-multiplexer is further configured for time-multiplexing said sub-type requests and for distinguishing between the first-subtype requests and the second-subtype requests in the low-priority requests by providing said sub-type requests with the indicator tag to obtain the low-priority request stream. Also, the input time-multiplexer is further configured for generating a sideband signal for indicating whether there are first-subtype requests pending on the inputs. Furthermore, in this embodiment the low-priority request stream is received by the low-priority input port, and the low-priority input port is coupled to the accounting unit and configured for generating an accounting signal for the accounting unit. This embodiment provides a convenient implementation for carrying out the method of claim 6.

In a third aspect, the invention relates to a System-on-Chip comprising the memory controller in accordance with the invention. Such System-on-Chip benefits from the invention in that its performance (in terms of memory request servicing) is improved.

The embodiments of the controller and the System-on-Chip described in this description are just examples. Many variations are possible. However, all such variations, when used in operation, effectively perform the method of the invention and therefore do not depart from the scope of the invention as claimed.

In a fourth aspect, the invention relates to a computer program product comprising instructions for causing a processor to perform the method in accordance with the invention. The functionality described in relation with the invention can be implemented in hardware, in software, or in any hybrid configuration containing both hardware and software functionality.

These and other aspects of the invention are apparent from and will be elucidated with reference to the embodiments described hereinafter.

BRIEF DESCRIPTION OF THE DRAWINGS

In the drawings:

Fig. 1 shows a memory controller as known from the prior art, and
Fig. 2 shows a memory controller in accordance with a first embodiment of the invention, and
Fig. 3 shows a memory controller in accordance with a second embodiment of the invention.

List of reference numerals:

| | |
|---|---|
| CBR | constant bandwidth request (low-priority first-subtype request) |
| BER | best-effort request (low-priority second-subtype request) |
| LLR | low-latency request (high-priority request) |
| ADP | adaptor |
| CNC1 | first time-multiplexer / first concentrator |
| CNC2 | second time-multiplexer / second concentrator |
| CNCCB | CB-time-multiplexer for constant-bandwidth requests |
| CNCBE | BE-time-multiplexer for best-effort requests |
| CBS | constant-bandwidth request stream (first-subtype request stream) |
| BES | best-effort request stream (second-subtype request stream) |
| CNC1' | adapted first time-multiplexer in accordance with second embodiment of the invention |
| SBA | slot-based arbiter |
| RRA | Round-Robin arbiter |
| LPS | low-priority request stream (comprising first and second subtype requests) |
| LPSI | internal low-priority request stream (comprising first and second subtype requests) |
| IDB | indicator bit |
| SBS | sideband signal |
| HPS | high-priority request stream (low-latency request stream) |
| HPSI | internal high-priority request stream (low-latency request stream) |
| CBP | first port for low-priority (constant bandwidth) requests |
| CBP' | adapted first port in accordance with second embodiment of the invention |
| LLP | port for high-priority (low latency) requests |
| ACS | accounting signal |
| ACS' | accounting signal in accordance with the invention |
| BEP | additional port for best-effort requests (low-priority second-subtype requests) |
| LPC | internal low-priority time-multiplexer / concentrator |
| ACC | accounting unit |
| CBG | first control gate for low-priority requests |
| LLG | second control gate for high-priority requests |
| RCG | refresh command generator |
| CBCG | first command generation stage for low-priority requests (comprising first queue and first command generator) |
| LLCG | second command generation stage for high-priority requests (comprising second queue and second command generator) |
| RC | refresh command |
| LPC | low-priority command |
| HPC | high-priority command |
| CSS | command selection stage |

DETAILED DESCRIPTION OF THE PREFERRED EMBODIMENT

Some memory controllers handle guaranteed constant bandwidth (CB) traffic mixed with non-guaranteed low latency (LL) traffic. The way to guarantee the CB-traffic is to temporarily block the LL-traffic when the CB guarantee is about to be violated. BE traffic does not need a guarantee AND can have a higher latency. BE traffic is typically not part of LL traffic, as this would increase latency for the other LL clients. Even if it would have the lowest priority among the LL clients (agents) (but higher than CB) it would enter the LL queue and therefore increase the latency for the other LL clients. Therefore the best effort (BE) traffic is typically mixed with the lower priority CB-traffic. However, as it becomes part of the guaranteed CB requests, it does also benefit from the CB-guarantee to the expense of the LL-traffic. This particularly occurs when the bandwidth of the CB traffic varies over time. In this case, a bandwidth must be guaranteed for serving CB-requests during peak periods that is higher than the long-term average bandwidth. As a consequence, the BE requests enjoy the guarantee of the CB traffic during periods that the CB traffic temporarily has a lower bandwidth. The invention distinguishes BE-traffic from CB-traffic by adding an indicator bit to the respective request stream or by receiving said BE-traffic and CB traffic via separate ports. This allows the memory controller to distinguish the BE requests from the CB requests for which a guarantee is needed, so that the BE requests do not enjoy the CB guarantee. By doing so the LL-traffic is given a better service at the expense of the BE-traffic.

In order to facilitate the discussion of the detailed embodiments a few expressions are defined hereinafter.

Throughout this description the term "System-on-Chip (SoC or SOC)" refers to the integration of all components of a computer or other electronic system into a single integrated circuit (chip). It may contain digital, analog, mixed-signal, and often radio-frequency functions, all components of which being on one chip. A typical application is in the area of embedded systems.

Throughout this description the term "agent" must be considered as synonym to IP block, IP core, logic core, and functional block, all of which referring to a certain component of a SoC, which may be sold individually by third parties as software, firmware and hardware.

Throughout this description the term "volatile memory" refers to a memory, which requires regular refreshing to maintain its data. Typical examples of such memory are dynamic-random-access-memory (DRAM) and synchronous-dynamic-random-access-memory (SDRAM). Of the latter different generations exist on the market, i.e. (single data rate) SDRAM, DDR SDRAM, DDR2 SDRAM, and DDR3 SDRAM. In DDR (double-data-rate) SDRAM's data is transmitted on each clock edge, i.e. twice per clock cycle. In DDR2 and DDR3 the bandwidth per clock cycle is doubled again.

Throughout this description the term "request" is to be interpreted as requests for a single transaction of an agent with the shared memory. Such transactions may have a different size for different agents, and may by either read or write transactions.

Throughout this description the term "minimum guaranteed bandwidth" is to be interpreted as the minimum guaranteed bandwidth of the data for a stream of requests (i.e. minimum guaranteed bandwidth at request-stream level). Individual requests in such a stream may be serviced in an irregular manner as long as the total stream is granted the required bandwidth. Sometimes also the word "rate" is used instead of bandwidth. It is the bandwidth of the *data* that is transferred to / from the memory for a stream of requests, requests being read or write requests.

Throughout this description the term "latency" is to be interpreted as the time from when a request is issued until this request has been serviced. A write request has been serviced when the data has been stored in memory. A read request has been serviced when the requested data has been returned from memory.

In some embodiments the latency-rate guarantee implies a minimum bandwidth guarantee and a maximum latency guarantee. In those embodiments these guarantees are to some extent interrelated. This implies that if requests are issued at a sufficiently high rate (higher than the guaranteed rate), then it is guaranteed that these requests are completed at a minimum guaranteed rate, starting from a maximum initial latency for the first request. For example, for read requests this implies that the first request completes before the maximum latency and for the first and subsequent requests data is returned at minimally the guaranteed rate.

Throughout this description the term "CB-request" may be interpreted as a latency-tolerant request that requires a latency-rate guarantee at request stream level. CB requests may be issued by agents that perform functions that need a real-time guarantee. An example of a CB request is a display controller that needs to be able to access data from memory in such a way that it can keep up with the display rate of the display. Such display controller typically has an input buffer (for collecting the data from memory) that is not allowed to run empty when picture data is to be displayed.

Throughout this description the term "BE-request" is to be interpreted as a latency-tolerant request that does not require a latency-rate guarantee. An example of a BE-request is data that is to be sent to some I/O peripheral, or some graphics data that may be redrawn with a low refresh rate.

Throughout this description the term "LL-request" is to be interpreted as a latency-critical request that needs to be serviced with low latency. Examples are requests from CPUs. Specifically for read requests, CPUs typically stall for the requests to complete. In order to limit the stall time of the CPUs, and thereby achieve an acceptable utilization of the CPUs, the latency for the memory accesses should be low.

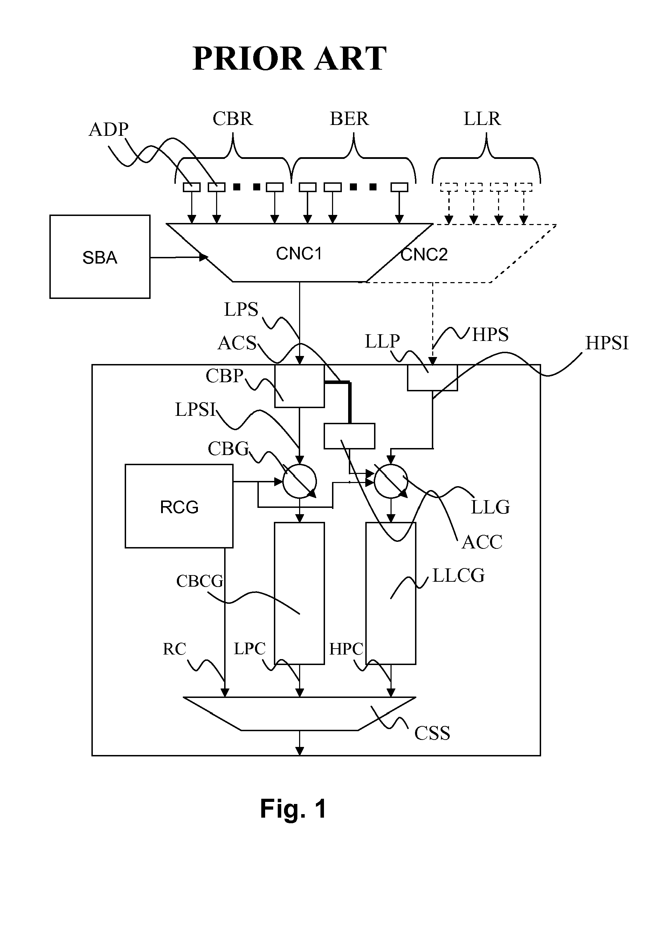

Fig. 1 shows a memory controller as known from the prior art.

This figure discloses a memory controller for a System-on-Chip (SoC), wherein several agents access a shared off-chip memory via the memory controller. The memory controller arbitrates between requests from the different agents. In some SoCs, such as in the example of Fig. 1, the requests are split into two main categories: latency-critical requests (having a high-priority) and latency-tolerant requests (having a low-priority). The latency-critical requests are being referred to as low-latency (LL) requests LLR in this example. The latency-tolerant requests are requests which are guaranteed a latency-rate guarantee (in this example a minimum bandwidth and a maximum latency on request stream level). The latency-tolerant requests are also being referred to as constant-bandwidth (CB) request in this example. The memory controller of Fig. 1 cannot handle more than two internal queues at high enough frequency for modern DRAM devices (and the same is true for off-chip memory controllers available in the market). As already mentioned, because of the limited number of ports and queues available best-effort (BE) traffic (which request due to their nature do not actually need the same latency-rate guarantee as the CB-requests) are mixed with the CB-traffic, i.e. the CB-requests CBR in Fig. 1 are time-multiplexed with best-effort (BE) requests BER in a first time-multiplexer CNC1 (also being referred to as low-priority input multiplexer).

The memory controller in Fig. 1 comprises the first time-multiplexer CNC1 for receiving the CB-requests CBR and the BE-requests and for generating a low-priority request stream LPS in which both request types are time-multiplexed as above described. The memory controller further comprises a second time-multiplexer CNC2 for receiving the LL-requests LLR. Each time-multiplexer (also being referred to as concentrator in the prior art) has a plurality of inputs connected to corresponding adaptors ADP (which are connected to corresponding agents), wherein each adaptor may be configured for a different transaction size (being adapted to the memory access requirements of the corresponding agent connected to it). The time-multiplexers are each connected to a slot-based arbiter SBA which determines the order in which the respective requests CBR, BER, LLR on the adaptors ADP are put on the respective outputs of the time-multiplexers CNC1, CNC2, i.e. which time-slot (or transaction slot) of the outputs is assigned to which adaptor/request. The requests are provided to the memory controller in a memory protocol. Examples of such memory protocols are memory-transaction-language (MTL) used in NXP's SoCs and the more widely spread AXI protocol. The first time-multiplexer CNC1 ensures that a low-priority request stream LPS of low-priority (CB, BE) requests LPR is provided to a first port CBP. The second time-multiplexer CNC2 ensures that a high-priority request stream HPS of high-priority (LL) requests HPR is provided to a second port LLP. It must be noted that both streams LPS, HPS are not necessarily continuous in time; it depends on the request supply on the adaptors ADP. It must be noted that in this description (and in the claims) the time-multiplexers CNC1, CNC2 are discussed as forming part of the memory controller. However, this is a matter of definition. In accordance with other definitions such multiplexers are being considered as pre-blocks before the memory controller forming part of the memory access network (which also includes the adaptors). Embodiments of the memory controller comprising the multiplexers may, in accordance with such other definition, be renamed to memory interface (comprising the memory controller AND (at least part of) the memory access network). This implies that, no matter which definition is chosen, all such definitions fall within the scope of the invention as claimed.

In the memory controller of Fig. 1, the CB-requests CBR are guaranteed a latency-rate guarantee by an accounting mechanism, a so-called CB-account has to be maintained which keeps track of the latitude with respect to the latency-rate guarantee of the CB stream. The LL-requests have the highest priority and the CB-requests and refresh commands RC (internally generated) are serviced when there are no LL-requests, i.e. these requests have a lower priority. When the CB-account reaches a certain threshold value (BOOST), the LL-requests are blocked and the CB-requests get serviced. In that way the CB-requests get a latency-rate guarantee (in this example a guaranteed maximum latency and a minimum rate).

An accounting unit ACC is provided and connected with its output to the first port CBP for maintaining the CB-account. The input of the accounting unit ACC is connected to the first port CBP for receiving an accounting signal ACS, wherein the accounting signal gives information about pending low-priority requests and the stage of requests being processed in the memory controller (being transferred or completed). The first port CBP generates an internal low-priority request stream LPSI and is connected to a first command generation stage CBCG via a first control gate CBG. The second port LLP generates an internal high-priority request stream HPSI and is connected to a second command generation stage LLCG via a second control gate LLG. Each command generation stage CBCG, LLCG comprises at its output side a command generator (not shown) for generating commands LPC, HPC for the memory. The command generation stages CBCG, LLCG each further comprise a FIFO queue for storing incoming requests. This occurs at burst level, a burst being a part of a request having a predefined constant size. The conversion of requests into bursts is carried out by a respective burst generator (not shown) at an input stage of the respective command generation stage CBCG, LLCG. Each of the control gates CBG, LLG is also controlled by a refresh command generator RCG. The second control gate LLG is also controlled by the accounting unit ACC. The command generators in the command generation stages CBCG, LLCG are connected to a command selection stage CSS, which determines which command (LPC, HPC) gets access to the memory. The command selection stage CSS has a third input for the receiving refresh commands from the refresh command generator RCG. In the command selection stage CSS the high-priority commands HPC go before pending low-priority commands LPC, which on their turn go before refresh commands RC. The way the configuration of Fig. 1 performs the earlier-mentioned arbitration is already partially discussed above and is discussed in more detail hereinafter.

A possible accounting mechanism (carried out by the accounting unit ACC) is as follows. A CB-account value is maintained. The CB-account value is always between zero and a maximum value (CLIP). The CB-account value is incremented with a first value (DEN) when CB-requests are given service or when there are no CB-requests pending. The meaning of "giving service" should be (in transaction-based accounting) data transfer when a transaction is started or when it has been completed; in any case one definition should be selected for all transactions. The CB-account value is decremented by a second value (NUM) when there are CB-requests pending and not being serviced. DEN and NUM are two values used to describe the transaction rate of the CB-traffic (CB-stream). The bandwidth is:

$$\text{NUM/DEN x total available bandwidth.}$$

In case of transaction rate accounting, the total available transaction rate is not fixed (it fluctuates with the durations of the transactions). In that case, a nominal transaction rate is defined for the memory interface, and the guaranteed CB transaction rate (cbtr) is:

$$\text{NUM/DEN x nominal transaction rate.}$$

In the above-mentioned formula the desired and the nominal transaction rate are both expressed in transactions/sec. Factor NUM/DEN defines a multiplication factor. The nominal transaction rate would be defined as bandwidth divided by the "average" transaction size for the CB traffic.

The maximum value of the CB-account corresponds to the maximum latency, up to the factor (NUM). The guaranteed maximum latency (cbl as will be explained later) equals:

$$\text{CLIP/NUM.}$$

It must be noted that in Figs. 1 to 3 the memory controllers have their control gate CBG, LLG in a request part of the data paths. In that case the ports CBP, LLP are mainly configured for receiving the respective request streams LPS, HPC and passing the requests on to the respective control gates CBG, LLG and eventually the command generation stages CBCG, LLCG. However, in order to be translated into memory commands LPC, HPC, the respective requests (which may vary in size) have to be converted into packets having a constant size, i.e. bursts or DDR bursts. The gating may also be done at burst-level. This means that the respective burst generators (not shown) of the respective command generation stages CBCG, LLCG may be put between the respective ports and the respective control gates (and optionally integrated into the ports CBP, LLP). Variations of the kind described in this paragraph do not affect the effect of the invention and do not depart from the scope of the invention as claimed.

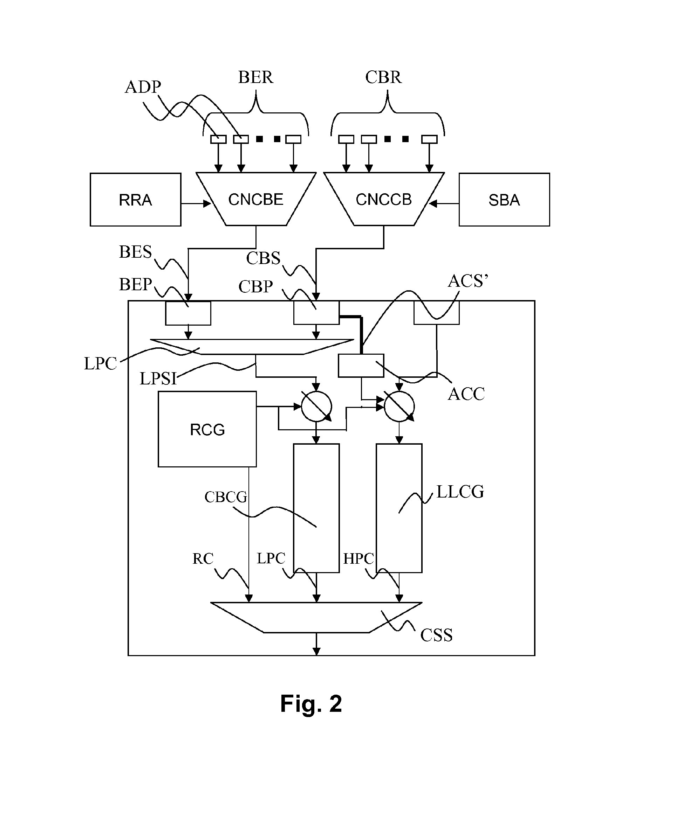

Fig. 2 shows a memory controller in accordance with a first embodiment of the invention. This embodiment will be discussed in as far as it differs from Fig. 1. The pre-multiplexer for the LL-requests has been omitted to facilitate proper reading of the figure. As already mentioned a first principle of the invention is to distinguish the CB requests (first-subtype requests) from the BE-requests (second-subtype requests) in the memory controller. A second principle is to arbitrate between the high-priority requests (LLR) and the low-priority requests (CBR, BER) as follows:

- the high-priority requests (LLR) are serviced with the highest priority, while guaranteeing the latency-rate guarantee for the first-subtype requests (CBR), and
- the high-priority requests (LLR) are serviced before the second-subtype requests (BER) if there are no first-subtype requests (CBR) to be serviced.

These two principles are achieved in the embodiment of Fig. 2 by giving each subtype request its own input port for distinguishing between said subtypes. To this end, the memory controller comprises a CB-time-multiplexer CNCCB for the constant-bandwidth requests CBR and a BE-time-multiplexer CNCBE for the best-effort requests BER. The CB-time multiplexer CNCCN has a plurality of inputs configured for receiving the CB-requests CBR from the respective adaptors ADP and for generating a CB-request stream CBS. The BE-time multiplexer CNCBE has a further plurality of inputs configured for receiving the BE-requests BER from the respective adaptors ADP and for generating a BE-request stream BES. It must be noted that the BE-time-multiplexer CNCBE does not require a slot-based arbiter SBA like the CB-time multiplexer CNCCB does. Instead, a straightforward arbiter, such as a Round-Robin arbiter (RRA) suffices. The CB-request stream CBS is coupled to the CB-port CBP and the BE-request stream BES is coupled to the additional BE-port BEP. Both ports pass on their respective request streams CBS, BES to an internal low-priority time-multiplexer LPC which generates a single internal low-priority request stream LPSI on its output which follows the same path through the respective control gate CBG and the respective command generation stage CBCG as in Fig. 1.

In this embodiment it is important that only the CB-port CBP is connected to the accounting unit ACC (which may be exactly the same accounting unit as in Fig. 1) to ensure the above-mentioned arbitration between said requests by maintaining a CB-account. Expressed differently, the accounting in Fig. 2 is only done for the CB-port CBP, which means that the CB-account is reset when the CB-port CBP is idle and there are no CB-requests/bursts being processed in the memory controller. When the CB-account is reset the blocking of the LL-requests is stopped, the boosting of the CB-request is stopped, and the LL-requests are serviced again. The BE-requests are serviced when there are no LL-requests and no boosted CB-requests pending.

The accounting signal ACS' in Fig. 2 is modified with respect to the accounting signal ACS in Fig. 1 in the sense that in Fig. 2 the accounting is done for the CB-requests only (and no longer for the BE-requests as in Fig. 1).

It must be noted that in the invention the high-priority requests LLR are processed before the second-subtype requests BER as long as there are no pending first-subtype requests CBR, i.e. as long as the second-subtype requests BER are not being "chased" by first-subtype requests CBR while the latency-rate guarantee is at risk. In any case such first-subtype request CBR cannot pass a second-subtype requests BER, because both subtype requests have to go through the same pipeline in the memory controller (i.e. the command generation stage CBCG).

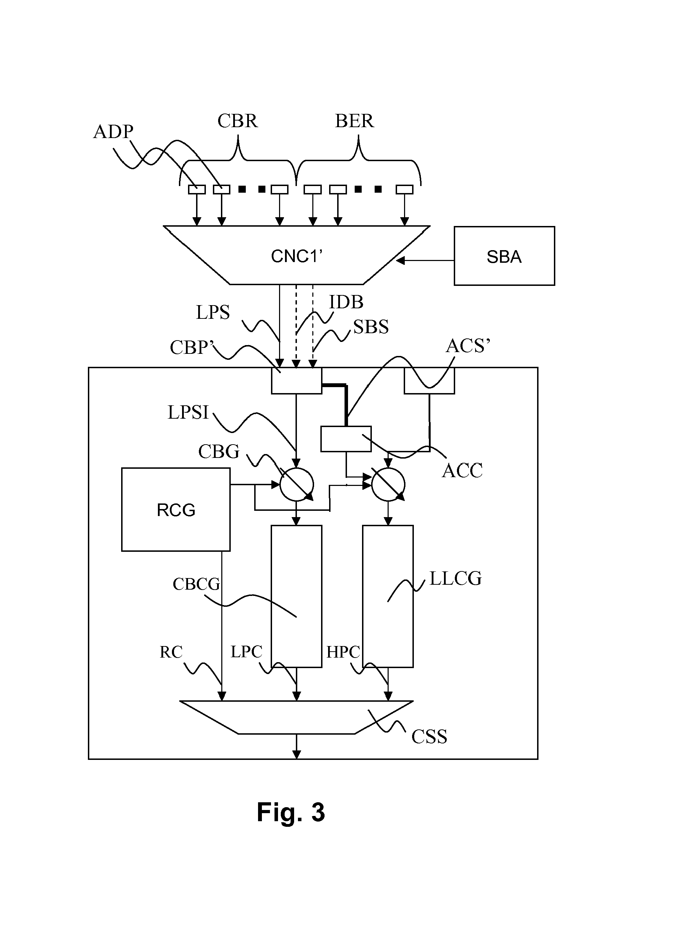

Fig. 3 shows a memory controller in accordance with a second embodiment of the invention. This embodiment will be discussed in as far as it differs from Figs. 1 and 2. Just as in Fig. 2, the pre-multiplexer for the LL-requests has been omitted to facilitate proper reading of the figure. In this embodiment of the invention the distinguishing between said subtype requests CBR, BER is carried out in the low-priority time-multiplexer CNC1' which has been adapted (with respect to the multiplexer CNC1 in Fig. 1) to carry out such functionality. This time-multiplexer CNC1' is configured for receiving requests in the same manner as Fig. 1. However, the time-multiplexer in Fig. 3 is configured for distinguishing between said first-subtype requests CBR and said second-subtype requests BER and providing said requests with an identifier tag IDB (this may be a single bit in an example embodiment, for example one bit of the MTL ID) on the output. It must be noted that the identifier tag IDB is added to the MTL request, i.e. the MTL specifications of the memory controller are changed in this embodiment. In this way the respective subtype requests remain identifiable in the low-priority request stream LPS generated by the time-multiplexer CNC1'. Furthermore, the adapted time-multiplexer CNC1' is configured for generating a sideband signal on its output which indicates whether there are first-subtype requests CBR pending on any one of its inputs. If this is the case the LL-requests LLR may not be serviced before the second-subtype requests BER under all circumstances as the CB-request CBR needs to be taken into account by the accounting unit ACC, i.e. the CB account may not be reset despite the fact that a BE-request is being received by the CB-port CBP'. Expressed differently, the slot-based arbiter SBA connected to the time-multiplexer CNC1' passes second-subtype requests BER to its output when there is no request for the actual time-slot. This does not mean that there are no pending first-subtype requests CBR on other inputs of the time-multiplexer CNC1'. It may thus happen that a second-subtype request BER arrives at the low-priority port CBP', while there are pending first-subtype requests CBR at the time-multiplexer CNC1' and this must be known by the accounting unit ACC.

With slot-based arbitration LLR requests could still take preference over BER requests (even when CBR requests pending) as long as accounting signals that guarantee of CBR requests can still be satisfied (no boosting needed yet). In an alternative embodiment the slot-based arbiter for the time-multiplexer CNC1' always selects CB-requests CBR when they are available. Furthermore, in such embodiment BE-requests are only allowed to pass when there are no CB-requests CBR.

It must be noted that in Fig. 3 the CB-port CBP' is modified with respect to the corresponding port in Fig. 1, i.e. it has been configured for receiving said low-priority request stream LPS including the indicator tags IDB and the sideband signal SBS. The modified CB-port CBP' is configured such that the accounting signal ACS' is the same as in Fig. 2 given a same request offering on the inputs. Expressed differently, the accounting in Fig. 3 is only to be done for the CB-requests CBR. This means that the CB-account is reset when the CB-port CBP' is idle and there are no CB-requests/bursts being processed in the memory controller or when there is a BE-request pending on the CB-port CBP' and the sideband signal indicates that there is no CB-request pending on one of the inputs of the time-multiplexer CNC1' and there are no CB-requests/bursts being processed in the memory controller. Just as in the embodiment of Fig. 2, when the CB-account is reset the blocking of the LL-requests is stopped, the boosting of the CB-request is stopped, and the LL-requests are serviced again. The BE-requests are serviced when there are no LL-requests and no CB-requests pending.

Just as for Fig. 2, for the embodiment shown in Fig. 3 it must be noted that in the invention the high-priority requests LLR are processed before the second-subtype requests BER as long as there are no pending first-subtype requests CBR, i.e. as long as the second-subtype requests BER are not being "chased" by first-subtype requests CBR. In any case such (chasing) first-subtype request CBR cannot pass a second-subtype requests BER, because both subtype requests have to go through the same pipeline in the memory controller (i.e. the command generation stage CBCG).

Fig. 2 and Fig. 3 illustrate two main variants of the memory controller of the invention. Many variations on these embodiments are possible. In any case, an important aspect of the invention is that the memory controller only blocks the LL-requests if there is a risk to violate the latency-rate guarantee of the CB-requests while there are CB-requests pending.

In a SoC, the CB and BE requests are generated by nodes (for example IP1820 adapters). These nodes are connected to the multiplexer(s). In a high-end SoC there are around 10-30 nodes (agents). Some of the nodes only generate CB-requests whereas others only generate BE-requests, but there are also nodes that can generate CB or BE-requests dependent on the use case.

The advantage of the embodiment of Fig. 2 is that there is no sideband signal needed at MTL level between the pre-multiplexers and the memory controller. A disadvantage is that some nodes have to be connected to both the BE-port BEP and the CB-port CBP, because of the fact that they generate CB-traffic in some use cases and BE-traffic in other use cases. Furthermore, the embodiment of Fig. 2 requires two pre-multiplexers which implies more costs in terms of area in the SoC. The embodiment of Fig. 3 has opposite advantages and disadvantages.

The invention is detectable in the embodiment of Fig. 2, because of the additional BE port BEP on the memory controller. The invention is detectable in the embodiment of Fig. 3, because of the sideband signal and the changed MTL specifications (at least one additional bit for the identifier tag).

Improving latency by using a dynamic boosting value

With the invention, the CB-queue (inside the low-priority command generation stage CBCG) may be full with DDR bursts from BE-requests when a CB-request arrives and the CB-account starts to decrement from the clipping value (CLIP). The CB-request has to wait for the BE-requests that are already (partially) in the queue, so it may take a longer time between an issue of a boost (of the CB-requests) and the actual service (of the CB-requests) than without the invention. This implies that the boost level of the CB-account must be set differently (i.e. in the accounting mechanism described earlier that means "set higher") to take this delay into account. This is disadvantageous, because the LL-requests will be blocked more often, i.e. longer. This can be addressed by making the boost level of the CB-account dynamic. An up-down-counter may be used to count how many BE-requests have to be serviced (because they are in progress in the memory controller) before the next CB-request on the CB-port CBP can be serviced. The boost level can be computed as follows using this parameter:

$$boost = boost\_base + b \cdot C,$$

wherein parameter C is a constant which depends on the largest size of a BE request, and parameter b is the number of BE-requests being in progress (ahead of the CB-request when pending on the CB-port CBP).

It must be noted that in the Figures only the control flow is shown. The data flows are omitted. The only aspect of the data flow relevant for this invention is detecting the start or completion of the data transfer corresponding with the transaction. In both definitions (which is a matter of choice), the port is aware of the event. Both options are workable solutions; the difference is in defining the acceptable latency, which is longer when the transactions are counted on completion than when the transactions are counted at the start of the transfer. In accordance with the definition chosen, a transaction is considered pending as long as the data transfer has not started or is not yet completed.

The invention thus provides a method of controlling access of a System-on-Chip to an off-chip memory, wherein the System-on-Chip comprises a plurality of agents which need access to the memory. The method comprises: i) receiving low-priority requests CBR, BER for access to the memory; ii) receiving high-priority requests LLR for access to the memory; iii) distinguishing between first-subtype requests CBR and second-subtype requests BER in the low-priority requests CBR, BER, wherein the first-subtype requests CBR require a latency-rate guarantee, and iv) arbitrating between the high-priority requests LLR and the low-priority requests CBR, BER such that the high-priority requests LLR are serviced with the highest priority, while guaranteeing the latency-rate guarantee for the first-subtype requests CBR, wherein the high-priority requests LLR are serviced before the second-subtype requests BER if there are no first-subtype requests CBR to be serviced for guaranteeing the latency-rate guarantee. The invention further provides a memory controller for use in a System-on-Chip connected to an off-chip memory, wherein the System-on-Chip comprises a plurality of agents, which need access to the memory, wherein the memory controller is configured for carrying such method. The invention also provides a System-on-Chip comprising such memory controller. With the invention the high-priority requests (LL-requests) get a better service, i.e. a smaller average latency, at the expense of the second-subtype requests.

The invention may be applied in various application areas. For example, the invention may be applied in a System-on-Chip, wherein a plurality of agents communicated via a shared memory. The invention may also be applied in the memory controller of the Nexperia™ SoC from NXP. The indicator tag in accordance with an embodiment of the invention will form part of the memory interface protocols such OCP, AXI, or MTL, which need to be adapted accordingly.

Various variations of the memory controller, system and method in accordance with the invention are possible and do not depart from the scope of the invention as claimed.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

**Claims**

1. A method of controlling access of a System-on-Chip to an off-chip memory, wherein the System-on-Chip comprises a plurality of agents which need access to the memory, the method comprising:

   - receiving low-priority requests (CBR, BER) for access to the memory, wherein the low-priority requests are received from a first-subset of the plurality of agents;
   - receiving high-priority requests (LLR) for access to the memory, wherein the high-priority requests are received from a second-subset of the plurality of agents;
   - distinguishing between first-subtype requests (CBR) and second-subtype requests (BER) in the low-priority requests (CBR, BER), wherein the first-subtype requests (CBR) require a latency-rate guarantee, and wherein the second-subtype requests (BER) do not require the latency-rate guarantee;
   - arbitrating between the high-priority requests (LLR) and the low-priority requests (CBR, BER) such that the high-priority requests (LLR) are serviced with the highest priority, while guaranteeing the latency-rate guarantee for the first-subtype requests (CBR), wherein the high-priority requests (LLR) are serviced before the second-subtype requests (BER) if there are no first-subtype requests (CBR) to be serviced for guaranteeing the latency-rate guarantee.

2. The method as claimed in claim 1, wherein the arbitrating between the high-priority requests (LLR) and the low-priority requests (CBR, BER) is carried out such that the high-priority requests (LLR) are serviced first and the low-priority requests (CBR, BER) are serviced when there are no high-priority requests (LLR) pending, unless the guaranteeing of the latency-rate guarantee for the first-subtype requests (CBR) is at risk, in which case the low-priority requests (CBR, BER) are serviced ahead of high-priority requests (LLR) until the latency-rate guarantee can be guaranteed again.

3. The method as claimed in claim 2, wherein the guaranteeing of the latency-rate guarantee for the first-subtype requests (CBR) is achieved by maintaining a low-priority account which keeps track of a latitude of the pending first-subtype requests (CBR) with respect to the latency-rate guarantee of the low-priority requests on request-stream level.

4. The method as claimed in claim 3, wherein the distinguishing between the first-subtype requests (CBR) and the second-subtype requests (BER) is achieved by providing the requests (CBR, BER) with an indicator tag (IDB) for indicating the respective subtype request, wherein the indicator tag (IDB) is determined based on a respective one of the first-subset of the plurality of agents from which the respective request is received.

5. The method as claimed in claim 4, wherein, during or before providing the requests with the indicator tag, the first-subtype requests (CBR) and the second-subtype requests (BER) are time-multiplexed to obtain a low-priority request stream (LPS) to be serviced.

6. The method as claimed in claim 5, wherein the low-priority request stream (LPS) is further provided with a sideband-signal (SBS) for indicating if there are first-subtype requests (CBR) pending before time-multiplexing of the low-priority requests (CBR, BER), wherein in the maintaining of the low-priority account only the first-subtype requests (CBR) in the low-priority stream (LPS) are taken into account making use of the indicator tag (IDB), and wherein the low-priority account is reset i) when the sideband signal (SBS) indicates that there are no first-subtype requests (CBR) pending before time-multiplexing, and ii) when there are no first-subtype requests (CBR) in progress after time-multiplexing.

7. The method as claimed in claim 3, wherein the distinguishing between first-subtype requests (CBR) and the second-subtype requests (BER) is achieved by receiving the subtype requests (CBR, BER) via different ports (CBP, BEP), wherein a first one of said different ports (CBP) is assigned to the first-subtype requests (CBR) and a second one of said different ports (BEP) is assigned to the second-subtype request (BER), wherein, after receipt of the subtype-requests via the different ports, the respective subtype requests are time-multiplexed to obtain an internal low-priority request stream (LPSI) to be serviced.

8. The method as claimed in claim 7, wherein a first-subtype request stream (CBS) is received via the first one of said different ports (CBP), wherein the first-subtype request stream (CBS) is generated by time-multiplexing first-subtype requests (CBR) received by the respective agents, wherein a second-subtype request stream (BES) is received via the second one of said different ports (BEP), wherein the second-subtype request stream (BES) is generated by time-multiplexing second-subtype requests (BER) received by the respective agents.

9. The method as claimed in claim 8, wherein in the maintaining of the low-priority account only the first-subtype requests (CBR) in the first-subtype request stream (CBS) are taken into account, and wherein the low-priority account is reset: i) when there are no first-subtype requests (CBR) pending on the first one of said different ports (CBP), and ii) when there are no first-subtype requests (CBR) in progress after receipt on the first one of said different ports (CBP).

10. A memory controller for use in a System-on-Chip connected to an off-chip memory, wherein the System-on-Chip comprises a plurality of agents, which need access to the memory, wherein the memory controller is configured for carrying out the method as claimed in any one of the preceding claims.

11. The memory controller as claimed in claim 10, further comprising:

- a low-priority input port (CBP, BEP, CBP') for receiving the low-priority requests (CBR, BER) for access to the memory, wherein the low-priority requests are received from the first-subset of the plurality of agents;
- a high-priority input port (LLP) for receiving high-priority requests (LLR) for access to the memory, wherein the high-priority requests are received from the second-subset of the plurality of agents;
- a low-priority control gate (CBG) being coupled to the low-priority input port (CBP, BEP, CBP') for receiving the low-priority requests (CBR, BER);

- a high-priority control gate (LLG) being coupled to the high-priority input port (LLP) for receiving the high-priority requests (LPR);
- a low-priority command generation stage (CBCG) being coupled to the low-priority control gate (CBG) for receiving the low-priority requests (CBR, BER) and for generating low-priority commands (LPC) for the memory;
- a high-priority command generation stage (LLCG) being coupled to the high-priority control gate (LLP) for receiving the high-priority requests (LLR) and for generating high-priority commands (HPC) for the memory, and
- an accounting unit (ACC) being coupled to the low-priority input port (CBP, CBP') for monitoring the latency-rate guarantee for the first-subtype requests (CBR), and being coupled to the high-priority control gate (LLG) for controlling the high-priority control gate (LLG) accordingly.

12. The memory controller as claimed in claim 11, wherein the low-priority input port comprises a first port (CBP) for receiving the first-subtype requests (CBR) and a second port (BEP) for receiving the second-subtype requests (BER) for distinguishing between the first-subtype requests (CBR) and the second-subtype requests (BER) in the low-priority requests (CBR, BER), wherein the memory controller further comprises a low-priority multiplexer being coupled to the first port (CBP) and the second port (BEP) and being configured for time-multiplexing said sub-type requests (CBR, BER) to obtain an internal low-priority request stream (LPSI), wherein the internal low-priority request stream (LPSI) is received by the low-priority control gate (CBG), wherein the first port (CBP) is coupled to the accounting unit (ACC) and configured for generating an accounting signal (ACS) for the accounting unit (ACC).

13. The memory controller as claimed in claim 11, further comprising an input time-multiplexer (CNC1') having multiplexer-inputs being coupled to the plurality of agents for receiving the first-subtype requests (CBR) and the second-subtype requests (BER), wherein the input time-multiplexer (CNC1') is further configured for time-multiplexing said sub-type requests (CBR, BER) and for distinguishing between the first-subtype requests (CBR) and the second-subtype requests (BER) in the low-priority requests (CBR, BER) by providing said sub-type requests with the indicator tag (IDB) to obtain the low-priority request stream (LPS), wherein the input time-multiplexer (CNC1') is further configured for generating a sideband signal (SBS) for indicating whether there are first-subtype requests (CBR) pending on the inputs, wherein the low-priority request stream (LPS) is received by the low-priority input port (CBP'), wherein the low-priority input port (CBP') is coupled to the accounting unit (ACC) and configured for generating an accounting signal (ACS') for the accounting unit (ACC).

14. A System-on-Chip comprising the memory controller as claimed in any one of the preceding claims 10 to 13.

15. A computer program product comprising instructions for causing a processor to perform the method as claimed in any one of claims 1 to 9.

# PRIOR ART

**Fig. 1**

**Fig. 2**

**Fig. 3**

Europäisches
Patentamt

European
Patent Office

Office européen
des brevets

**EUROPEAN SEARCH REPORT**

Application Number

EP 09 17 0189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/094142 A2 (QUALCOMM INC [US]; GANASAN JAYA PRAKASH SUBRAMANI [US]; HOFMANN RICHAR) 8 September 2006 (2006-09-08) | 1-3,10 | INV. G06F13/16 G06F13/362 |
| A | * paragraphs [0020] - [0024], [0 30] - [0031] * * column 6, lines 3-45 * ----- | 4-9, 11-15 | |
| Y | WO 2008/002297 A1 (THOMSON LICENSING [FR]; CHEN SHUYOU [US]; HORLANDER THOMAS EDWARD [US]) 3 January 2008 (2008-01-03) * the whole document * ----- | 1-3 | |
| Y | JEN C-W ET AL: "An Efficient Quality-Aware Memory Controller for Multimedia Platform SoC" IEEE TRANSACTIONS ON CIRCUITS AND SYSTEMS FOR VIDEO TECHNOLOGY, IEEE SERVICE CENTER, PISCATAWAY, NJ, US, vol. 15, no. 5, 1 May 2005 (2005-05-01), pages 620-633, XP011131124 ISSN: 1051-8215 * pages 625-626 * ----- | 1-3 | |
| | | | TECHNICAL FIELDS SEARCHED (IPC) G06F G11C |
| A | US 2005/125581 A1 (BROWN JEFFREY D [US] ET AL BROWN JEFFREY DOUGLAS [US] ET AL) 9 June 2005 (2005-06-09) * paragraphs [0036] - [0043], [0 62] - [0067] * ----- | 1-15 | |

The present search report has been drawn up for all claims

| Place of search | Date of completion of the search | Examiner |
|---|---|---|
| The Hague | 15 February 2010 | Czarik, Damien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                            
& : member of the same patent family, corresponding
    document

EPO FORM 1503 03.82 (P04C01)

**EP 2 296 091 A1**

## ANNEX TO THE EUROPEAN SEARCH REPORT
## ON EUROPEAN PATENT APPLICATION NO.

EP 09 17 0189

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2010

| Patent document cited in search report | | Publication date | Patent family member(s) | | Publication date |
|---|---|---|---|---|---|
| WO 2006094142 | A2 | 08-09-2006 | AT | 444529 T | 15-10-2009 |
| | | | CA | 2599361 A1 | 08-09-2006 |
| | | | CN | 101164051 A | 16-04-2008 |
| | | | EP | 1861787 A2 | 05-12-2007 |
| | | | JP | 2008532183 T | 14-08-2008 |
| | | | KR | 20070110529 A | 19-11-2007 |
| | | | RU | 2372645 C2 | 10-11-2009 |
| | | | US | 2006200607 A1 | 07-09-2006 |
| WO 2008002297 | A1 | 03-01-2008 | CN | 101495979 A | 29-07-2009 |
| | | | EP | 2033102 A1 | 11-03-2009 |
| | | | JP | 2009543183 T | 03-12-2009 |
| US 2005125581 | A1 | 09-06-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. Dutta et al.** Viper: A multiprocessor SOC for Advanced Set-Top Box and Digital TV Systems. *IEEE Design & Test of Computers,* September 2001, 21-31

- **Claasen, T.A.C.M.** System on a chip: changing IC design today and in the future. *Micro, IEEE,* May 2003, vol. 23 (3), 20-26